# EUROPÄISCHE PATENTSCHRIFT

(11) **EP 2 681 085 B1**
(45) Veröffentlichungstag und Bekanntmachung des Hinweises auf die Patenterteilung: **10.05.2017**
(21) Anmeldenummer: 12707084.5
(22) Anmeldetag: 01.03.2012
(51) Int. Cl.: B60T 7/22

(54) **VERFAHREN UND VORRICHTUNG ZUR PRÄDIKTION UND ADAPTION VON BEWEGUNGSTRAJEKTORIEN VON KRAFTFAHRZEUGEN**
METHOD AND DEVICE FOR THE PREDICTION AND ADAPTATION OF MOVEMENT TRAJECTORIES OF MOTOR VEHICLES
PROCÉDÉ ET DISPOSITIF DE PRÉDICTION ET D'ADAPTATION DE TRAJECTOIRES DE DÉPLACEMENT DE VÉHICULES AUTOMOBILES

(30) Priorität: 01.03.2011 DE 102011004880; 01.03.2011 DE 102011004877; 04.03.2011 DE 102011005098
(43) Veröffentlichungstag der Anmeldung: 08.01.2014
(73) Patentinhaber: Continental Teves AG & Co. OHG, 60488 Frankfurt (DE)
(72) Erfinder: BRETZIGHEIMER, Kai, 63741 Aschaffenburg (DE); FÖRSTER, Daniel, 64287 Darmstadt (DE); HARTMANN, Andreas, 88433 Aßmannshardt (DE); HARTMANN, Bernd, 61350 Bad Homburg (DE); STAAB, Thorsten, 63768 Hösbach (DE); STÄHLIN, Ulrich, 65670 Eschborn (DE)
(74) Vertreter: Bobbert, Christiana
(86) Internationale Anmeldenummer: PCT/EP2012/053492
(87) Internationale Veröffentlichungsnummer: WO 2012/117044

(56) Entgegenhaltungen:
- EP-A1- 1 600 321
- EP-A1- 1 977 946
- WO-A1-02/08010
- WO-A1-03/006288
- WO-A1-2010/028629
- DE-A1-102005 002 760
- DE-A1-102005 003 274
- DE-A1-102008 040 241
- DE-A1-102009 020 649
- DE-A1-102010 028 384
- US-A1- 2004 193 374

## Beschreibung

Die vorliegende Erfindung betrifft ein Verfahren zur Prädiktion und Adaption von Bewegungstrajektorien eines Kraftfahrzeugs zur Unterstützung des Fahrers in seiner Fahraufgabe und/oder zur Verhinderung einer Kollision oder Minderung von Unfallfolgen. Außerdem betrifft die vorliegende Erfindung eine Vorrichtung zur Durchführung des Verfahrens.

Aus der WO 03/006288 A1 ist ein derartiges Verfahren und eine Vorrichtung bekannt. Das vorbekannte Verfahren zur Prädiktion von Bewegungstrajektorien eines Fahrzeugs dient einer Verhinderung oder einer Folgenverminderung einer bevorstehenden Kollision. Das Verfahren wird also ausschließlich in Notsituationen eingesetzt. Bei diesem Verfahren werden zur Prädiktion der Bewegungstrajektorien nur die Bewegungstrajektorien berücksichtigt, bei denen infolge einer Kombination aus Lenk- und Bremseingriff die an den Rädern des Fahrzeugs auftretenden Kräfte in dem Bereich liegen, der der maximal vom Rad auf die Straße übertragbaren Kraft entspricht. Dies ist der Grenzbereich unter Ausnutzung des maximalen Reibbeiwerts. Es erfolgt ein automatischer Brems-oder Lenkeingriff in Abhängigkeit der vorausberechneten Bewegungstrajektorien.

Aus der DE 10 2010 028 384 A1 ist ein Verfahren zur Steuerung der Fahrstabilität eines Fahrzeugs und zur Kollisionsvermeidung mit einem in der Fahrspur befindlichen Objekt bekannt. Bei dem vorbekannten Verfahren wird anhand von Umfeldsignalen ermittelt, ob eine fahrdynamisch kritische Situation bzw. eine bevorstehende Kollision vorliegt. Das Verfahren wird also ausschließlich in Notsituationen eingesetzt.

Die WO 02/08010 A1 betrifft ein automatisches Brems-und Lenksystem für ein Fahrzeug, das eine Sensoreinheit zur Erfassung von Fahrzeug-Zustandsgrößen und Fahrzeug-Kenngrößen und von Umgebungsbedingungen beinhaltet. Darüber hinaus sind eine Regel- und Steuereinheit und Stelleinrichtungen zur Einstellung der Fahrzeugbremse und/oder der Fahrzeuglenkung vorgesehen. Um mit größtmöglicher Sicherheit automatische Ausweichmanöver durchführen zu können, wird im Falle eines Hindernisses im Fahrweg eine Ausweichroute ermittelt, wobei für den Fall, dass in der Ausweichroute ein weiteres Hindernis liegt, die Strategie zur Ermittlung der Ausweichroute nochmals angewandt wird. Ist eine kollisionsfreie Ausweichroute nicht auffindbar, wird diejenige Route gewählt, bei der die Differenz von verbleibendem Bremsweg und verbleibender Distanz zum Hindernis am geringsten ist.

Aus der DE 10 2008 040 241 A1 ist eine Ausweichfunktion zur Vermeidung von Kollisionen eines Kraftfahrzeugs bekannt, die das Berechnen einer Ausweichtrajektorie umfasst. Bei der Berechnung der Ausweichtrajektorie werden vorzugsweise die aktuelle Fahrsituation und insbesondere auch die grundsätzliche Möglichkeit zur Durchführung eines Ausweichmanövers beachtet (Gegenverkehr, Raumverhältnisse). Darüber hinaus berücksichtigt diese Assistenzfunktion vorzugsweise auch die aktuelle Fahrzeuggeschwindigkeit und/oder die Friktionsverhältnisse der Strasse. Die Assistenzfunktion wird vorzugsweise aktiviert, wenn ein Hindernis erkannt worden ist und die Wahrscheinlichkeit für ein kurz bevorstehendes Ausweichmanöver hoch ist. Eine hohe Wahrscheinlichkeit kann beispielsweise angenommen werden, wenn die Zeitdauer bis zu einer möglichen Kollision des Fahrzeugs mit dem Hindernis kleiner ist als ein vorgegebener Schwellenwert. Vorzugsweise wird diese Funktion also in Notsituationen eingesetzt.

Aus der DE 10 2005 002 760 A1 ist ein Verfahren zur Unfallvermeidung von Kraftfahrzeugen bekannt, bei dem bei Erkennen einer bevorstehenden Kollision mit einem detektierten Objekt eine Kollisionsvermeidung geplant wird, die das Berechnen einer Ausweichtrajektorie umfasst. Vorzugsweise wird im Falle eines linken bzw. rechten Ausweichmanövers unter Vorgabe eines definierten Querbeschleunigungsprofils eine stetige Ausweichtrajektorie berechnet, bei der das Überschreiten einer maximal zulässigen Querbeschleunigung nicht zulässig ist. Insbesondere wird die Ausweichtrajektorie so berechnet, dass sie einen seitlichen Versatz des Fahrzeugs aufweist, mit anderen Worten, das Fahrzeug wird seitlich des auszuweichenden Objekts versetzt. Das zu planende Manöver der Kollisionsvermeidung hat hierbei den Charakter eines Notmanövers und ist im fahrphysikalischen Grenzbereich angesiedelt. Das bedeutet ein bestmögliches Ausschöpfen der verfügbaren Haftung für die Längs- und Querkräfte, ohne sie zu überschreiten. Dieses Verfahren wird daher ebenfalls ausschließlich in Notsituationen eingesetzt.

Aus der DE 10 2009 020 649 A1 ist ein Verfahren zur Kollisionsvermeidung für ein Fahrzeug bekannt, bei dem im Falle einer drohenden Kollision mehrere mögliche Ausweichtrajektorien ermittelt und den Ausweichtrajektorien Zeitabstandsgrenzen zugeordnet werden, die den Zeitabstand zum Hindernis repräsentieren, bei dem zur Kollisionsvermeidung ein Ausweichmanöver gemäss der jeweiligen Trajektorie spätestens eingeleitet werden muss. Auch dieses bekannte Verfahren wird ausschließlich in Notsituationen eingesetzt.

Es ist daher Aufgabe der vorliegenden Erfindung, ein Verfahren der eingangs genannten Gattung dahingehend zu verbessern, dass vor dem Entstehen von Notsituationen Maßnahmen getroffen werden, die in einer möglichen Notsituation eine schnellere Reaktion zur Unterstützung des Fahrers in seiner Fahraufgabe und/oder zur Verhinderung einer Kollision oder Minderung von Unfallfolgen erwarten lassen.

Diese Aufgabe wird durch ein Verfahren und eine Vorrichtung mit den Merkmalen der unabhängigen Patentansprüche gelöst. Dabei ist vorgesehen, dass zur Prädiktion und Adaption der Bewegungstrajektorien des Kraftfahrzeugs eine Schnittmenge aus situativ notwendigen Bewegungstrajektorien, die mit Hilfe einer Umfeldsensorik bestimmt werden, und aus physikalisch möglichen Bewegungstrajektorien, die sich aus den fahrdynamischen Eigenschaften des Kraftfahrzeugs und dem sich zwischen Reifen und Fahrbahn einstellenden Reibbeiwert bis zu einem maximal möglichen Grenzreibbeiwert ergeben, gebildet wird, wobei ausschließlich Bewegungstrajektorien berücksichtigt werden, die sich innerhalb der Schnittmenge befinden. Damit ist gewährleistet, dass nur die Bewegungstrajektorien berücksichtigt werden, die sich aus den berechneten Bewegungstrajektorien ergebenden Radkräfte durch Kombination aus Brems- und/oder Lenkkräften unterhalb des maximal möglichen Grenzreibwerts liegen.

Bei einer vorteilhaften Weiterbildung des Verfahrens ist vorgesehen, dass aus der Schnittmenge nur eine Bewegungstrajektorie in Abhängigkeit von der Kritikalität der Fahrsituation berücksichtigt wird. Je höher die Kritikalität der Notsituation desto höher ist die Ausnutzung des maximal zur Verfügung stehenden Reibbeiwerts infolge von Brems- und oder Lenkeingriffen entsprechend der berechneten Bewegungstrajektorie. Mit Hilfe der Umfeldsensorik wird dabei ein Zielkorridor mit einem situativ notwendigen und physikalisch möglichen Toleranzband bestimmt.

Die situativ notwendigen Bewegungstrajektorien werden dabei anhand der Freifahrumgebung bestimmt und die physikalisch möglichen Bewegungstrajektorien werden durch die Fahrphysik begrenzt.

Es ist in einer Alternative vorgesehen, dass die prädizierte Bewegungstrajektorie während des Fahrmanövers ständig überwacht und im Bedarfsfall auf Grund einer sich dynamisch ändernden Fahrsituation adaptiert oder verworfen und neu prädiziert wird.

Brems- und/oder Lenkeingriffe werden vorzugsweise in Abhängigkeit der berechneten Bewegungstrajektorie mit dem Ziel der Fahrerunterstützung, der Korrektur der Fahrervorgaben oder automatisierten Eingriffen in die Brems- und/oder Lenkanlage vorgenommen. Dabei liegen die sich aus den Bewegungstrajektorien durch kombinierte Brems- und/oder Lenkeingriffe ergebenden Radkräfte jederzeit unterhalb des maximal verfügbaren Reibbeiwerts. Der maximal mögliche Reibbeiwert wird dabei durch zusätzliche Signale aus optischen Fahrbahnsensoren, wie Laser- und/oder Kamerasysteme, und/oder aus Fahrdynamikregelsystemen wie Fahrstabilitätsregelsystemen oder Schlupfregelsystemen und/oder aus weiteren Sensoren wie Regen-, Temperatur- oder Reifensensoren und/oder durch Einbeziehung von Informationen, die mittels Car-to-X-Kommunikation übertragen werden, verwendet werden. Reifensensoren sind beispielsweise Reifendrucksensoren. Anschließend wird der maximal mögliche Reibbeiwert durch die Signale der zur Bestimmung nicht verwendeten Sensoren plausibilisiert. Dazu wird beispielsweise der maximal mögliche Reibbeiwert logisch auf vorab bestimmte Werte begrenzt.

Eine Alternative des erfindungsgemäßen Verfahrens sieht vor, dass lediglich eine endliche Anzahl an Bewegungstrajektorien zur Unterstützung des Fahrers in allen Fahrsituationen vorab ermittelt und gespeichert wird. In einer Notsituation wird aus den vorab definierten Bewegungstrajektorien diejenige Bewegungstrajektorie ausgewählt, die der vorliegenden Fahrsituation am nächsten kommt. Dabei wird beim Erkennen einer kritischen Fahrsituation, eine geeignete Bewegungstrajektorie ausgewählt und dem ausführenden Steuergerät eine Ordnungsnummer der Bewegungstrajektorie übermittelt. Das ausführende Steuergerät entnimmt aus dem Speicher die der Ordnungsnummer entsprechende Bewegungstrajektorie und führt diese entsprechend aus. Der Vorteil dieses Verfahrens liegt darin, dass nicht die gesamte Freifahrumgebung zur Bildung einer Bewegungstrajektorie in Frage kommt, sondern nur die vorab definierten Bewegungstrajektorien. Durch diese Maßnahme wird Rechenleistung eingespart bzw. die Entscheidung zugunsten einer bestimmten Bewegungstrajektorie kann innerhalb kürzerer Zeit erfolgen.

Eine besonders vorteilhafte Weiterbildung des erfindungsgemäßen Verfahrens sieht vor, dass eine Bewegungstrajektorie als optimal erkannt wird, wenn sie sich innerhalb der Schnittmenge befindet und eine minimale Krümmung aufweist. Durch diese Maßnahme wird mit der ausgewählten Bewegungstrajektorie ein größtmöglicher Abstand zu den fahrphysikalischen Grenzen eingehalten und gleichzeitig das Fahrzeug sicher am Objekt vorbeigeführt.

Die Aufgabe wird auch durch eine Vorrichtung mit den Merkmalen des nebengeordneten Patentanspruchs gelöst. Dabei sind Mittel zur Prädiktion und Adaption der Bewegungstrajektorien des Kraftfahrzeugs vorgesehen, die eine Schnittmenge aus situativ notwendigen Bewegungstrajektorien, die mit Hilfe einer Umfeldsensorik bestimmt werden, und aus physikalisch möglichen Bewegungstrajektorien, die sich aus den fahrdynamischen Eigenschaften des Kraftfahrzeugs und dem sich zwischen Reifen und Fahrbahn einstellenden Reibbeiwert bis zu einem maximal möglichen Grenzreibbeiwert ergeben, bilden und ausschließlich Bewegungstrajektorien berücksichtigen, die sich innerhalb der Schnittmenge befinden.

Eine vorteilhafte Weiterbildung sieht vor, dass die Umfeldsensorik aus einem Radarsensor, einem Lidarsensor, einem Kamerasystem oder aus einer Kombination dieser Sensoren gebildet wird.

Außerdem ist ein Speicher vorgesehen, in dem eine vorab ermittelte, endliche Anzahl an Bewegungstrajektorien zur Unterstützung des Fahrers in allen Fahrsituationen gespeichert wird. Im ausführenden Steuergerät sind die Bewegungstrajektorien unter einer Ordnungsnummer gespeichert.

Die Erfindung wird nachfolgend anhand eines Ausführungsbeispiels im Zusammenhang mit der beiliegenden Zeichnung näher erläutert. In der Zeichnung zeigt:
- Fig. 1: eine schematische Darstellung eines Fahrzeugs mit einer Umfeldsensorik zum Erfassen von Objekten im Umfeld des Fahrzeugs;
- Fig. 2: eine schematische Darstellung eines Fahrerassistenzsystems;
- Fig. 3: eine schematische Darstellung einer optimalen Bewegungstrajektorie und
- Fig. 4: eine schematische Darstellung der Schnittmenge aus situativ notwendigen und physikalisch möglichen Bewegungstrajektorien.

Im Sinne der vorliegenden Erfindung steht Lenkrad stellvertretend für alle denkbaren Mensch-Maschine-Schnittstellen, die der Fahrzeugführer im Sinne eines Lenken und Steuern des Kraftfahrzeugs bedienen kann, wie beispielsweise ein Joystick oder ein Touchpad.

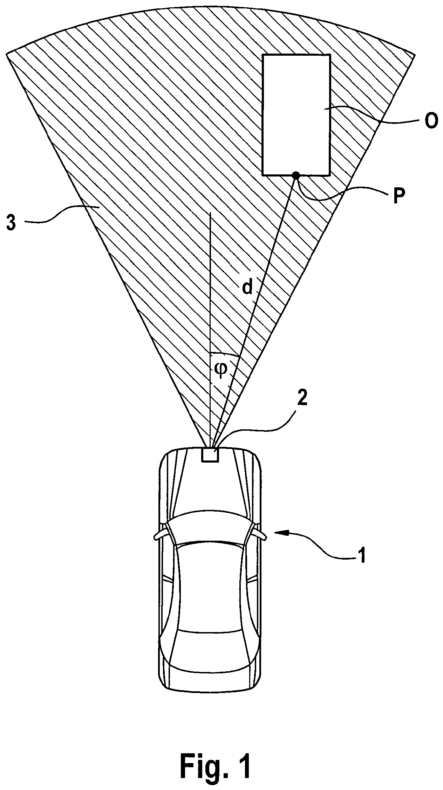

In Fig. 1 ist beispielhaft ein vierrädriges, zweiachsiges Fahrzeug 1 dargestellt, das über eine Umfeldsensorik 2 verfügt, mit dem Objekte O im Umfeld des Fahrzeugs erfasst werden können, bei denen es sich insbesondere um weitere Kraftfahrzeuge handelt, die sich in derselben oder einer benachbarten Fahrspur seitlich und/oder vor dem Fahrzeug 1 bewegen. Als Objekte O kommen aber auch statische oder nahezu statische Objekte wie beispielsweise Bäume, Fußgänger oder Fahrbahnbegrenzungen in Frage. Beispielhaft wird eine Umfeldsensorik 2 mit einem Erfassungsbereich 3 gezeigt, der einen Raumwinkel vor dem Fahrzeug 1 umfasst, in dem beispielhaft ein Objekt O dargestellt ist. Bei der Umfeldsensorik 2 handelt sich beispielsweise um einen LIDARSensor (Light Detection and Ranging) der dem Fachmann an sich bekannt ist. Ebenfalls sind jedoch auch andere Umfeldsensoren wie Radarsensoren oder optische Kamerasysteme oder eine Kombination aus den vorgenannten Umfeldsensoren einsetzbar. Darüber hinaus kann die Information um das Umfeld mittels der sogenannten Car-to-X-Kommunikation ermittelt werden. Darunter versteht man die Übertragung von Umfeldinformationen von anderen Fahrzeugen oder von anderen Erfassungspunkten an das Fahrzeug 1. Die Umfeldsensorik 2 misst die Abstände d zu den erfassten Punkten eines Objekts sowie die Winkel ϕ zwischen den Verbindungsgeraden zu diesen Punkten und der Mittellängsachse des Fahrzeugs, wie dies in Fig. 1 beispielhaft für einen Punkt P des Objekts O veranschaulicht ist. Die dem Fahrzeug 1 zugewandten Fronten der erfassten Objekte setzen sich aus mehreren erfassten Punkten zusammen, zu der die Sensorsignale übermittelt werden, die Korrelationen zwischen Punkten und der Form eines Objekts herstellt und einen Bezugspunkt für das Objekt O bestimmt. Als Bezugspunkt kann dabei beispielsweise der Mittelpunkt des Objekts O bzw. der Mittelpunkt der erfassten Punkte des Objekts gewählt werden. Die Geschwindigkeiten der detektierten Punkte und damit die Geschwindigkeit der erfassten Objekte können im Gegensatz zu einem Radar-Sensor(DopplerEffekt) mittels des LIDAR-Umfeldsensors 2 nicht direkt gemessen werden. Sie werden aus der Differenz zwischen den in aufeinander folgenden Zeitschritten gemessenen Abständen in einer taktweise arbeitenden Objekterkennungseinheit 21 berechnet. In ähnlicher Weise kann grundsätzlich auch die Beschleunigung der Objekte durch zweimaliges Ableiten ihrer Positionen bestimmt werden.

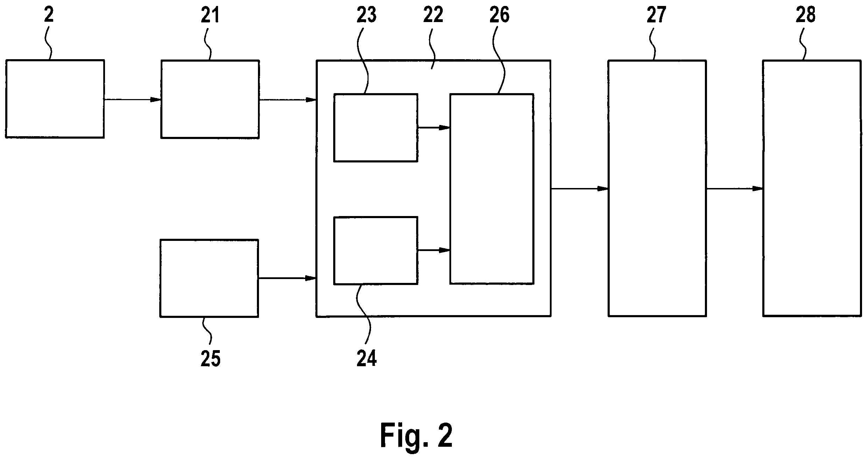

Fig. 2 zeigt eine schematische Darstellung eines Fahrerassistenzsystems, dessen Bestandteile mit Ausnahme von Sensoren und Aktuatoren vorzugsweise als Softwaremodule ausgeführt sind, die innerhalb des Fahrzeugs 1 mittels eines Mikroprozessors ausgeführt werden. Wie in Fig. 2 gezeigt, werden die Objektdaten in Form von elektronischen Signalen innerhalb des schematisch dargestellten Fahrerassistenzsystems an eine Entscheidungseinrichtung 22 übermittelt. In der Entscheidungseinrichtung 22 wird in Block 23 anhand der Informationen über das Objekt O eine Objekttrajektorie bestimmt. Ferner wird eine Bewegungstrajektorie T des Fahrzeugs 1 in Block 24 anhand von Informationen über den fahrdynamischen Zustand des Fahrzeugs 1 ermittelt, die mit Hilfe von weiteren Fahrzeugsensoren 25 bestimmt werden. Insbesondere werden dabei die beispielsweise mit Hilfe von Raddrehzahlsensoren ermittelbare Fahrzeuggeschwindigkeit, der mittels eines Lenkwinkelsensors gemessene Lenkwinkel δ an den lenkbaren Rädern des Fahrzeugs 1, die Gierrate und/oder die Querbeschleunigung des Fahrzeugs 1, die mittels entsprechender Sensoren gemessen werden, herangezogen. Darüber hinaus ist es möglich, aus den mit den Fahrzeugsensoren 25 gemessenen fahrdynamischen Zuständen des Fahrzeugs modellbasierte Größen zu berechnen bzw. zu schätzen. Die Reibwertinformationen zwischen den Reifen des Fahrzeugs 1 und der Fahrbahn wird dabei ebenfalls aus den Fahrzeugsensoren gewonnen. Der Reibbeiwert µ wird insbesondere aus dem Bremsenregelsystem ermittelt. Dann wird in der Entscheidungseinrichtung 22 innerhalb des Blocks 26 überprüft, ob sich das Kraftfahrzeug 1 auf einem Kollisionskurs mit einem der erfassten Objekte O befindet. Falls ein derartiger Kollisionskurs festgestellt wird und die ebenfalls in der Entscheidungseinrichtung 22 ermittelte Kollisionszeit, d.h. die Zeitdauer bis zu der ermittelten Kollision mit dem Objekt O, einen bestimmten Wert unterschreitet, wird ein Auslösesignal an eine Bahnvorgabeeinrichtung 27 übermittelt. Das Auslösesignal führt dazu, dass zunächst innerhalb der Bahnvorgabeeinrichtung eine Ausweichbahn, d.h. eine Bewegungstrajektorie T, berechnet wird. Dann wird aufgrund der ermittelten Ausweichbahnen bzw. aufgrund der ermittelten Schar von Bewegungstrajektorien T ein Startpunkt für das Ausweichmanöver bestimmt, an dem das Ausweichmanöver gestartet werden muss, um dem Objekt O gerade noch ausweichen zu können. Diese Schritte werden vorzugsweise in Zeitschritten wiederholt, bis keine Kollisionsgefahr aufgrund von Kursänderungen des Objekts O oder des Fahrzeugs 1 mehr besteht oder bis das Fahrzeug 1 den Startpunkt für ein Ausweichmanöver erreicht. Ist dies der Fall, werden die Ausweichbahn oder diese Bahn repräsentierende Parameter an eine Lenkungsaktuatorsteuerung 28 übermittelt.

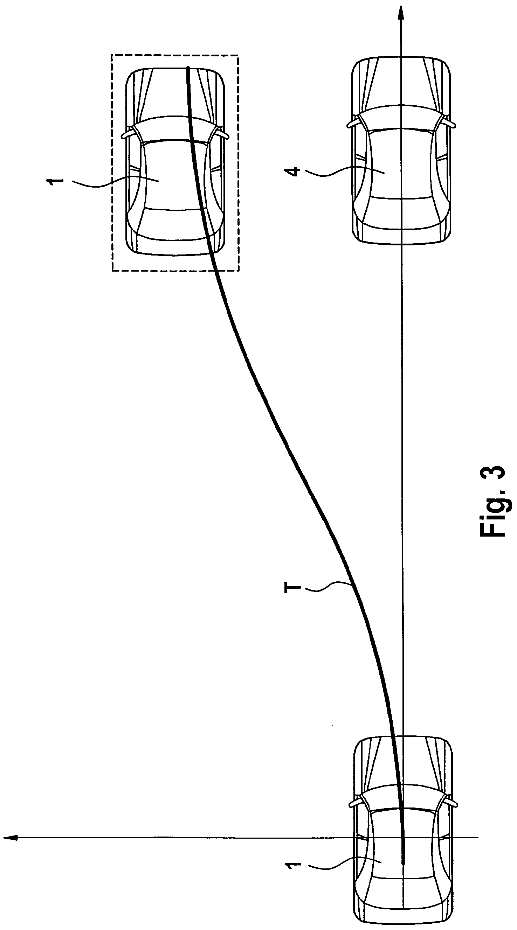

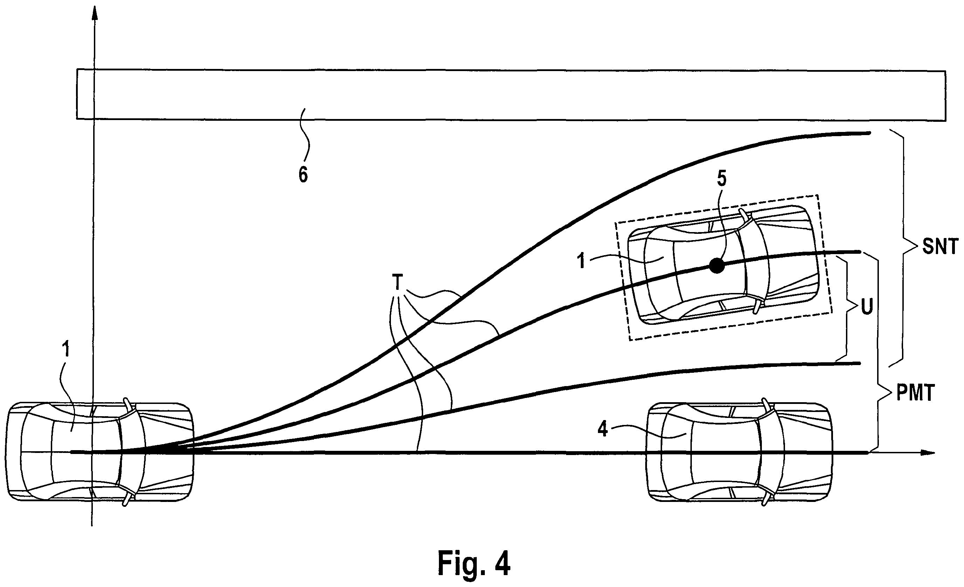

In Fig. 3 und 4 sind auf Abszisse der longitudinale Abstand zum Objekt O und auf der Ordinate der seitliche Ausweichabstand dargestellt. In Fig. 3 ist eine optimale Bewegungstrajektorie T dargestellt. Das Fahrzeug 1 umfährt auf dieser optimalen Bewegungstrajektorie T ein Hindernis, das in Fig. 3 als weiteres Fahrzeug 4 dargestellt ist. In Fig. 4 ist zusätzlich eine Fahrbahnbegrenzung 6 eingezeichnet. Die Schar von Bewegungstrajektorien T ist eine Kurvenschar. Das hier beschriebene Verfahren zur Prädiktion und Adaption von Bewegungstrajektorien T eines Fahrzeugs 1 dient der Unterstützung des Fahrers in seiner Fahraufgabe und/oder zur Verhinderung einer Kollision bzw. zur Minderung der Unfallfolgen. Es erfolgt ein Abgleich der situativ notwendigen Bewegungstrajektorien SNT mit den vom Fahrzeug und vom Reibbeiwert zwischen Reifen und Fahrbahn abhängigen und damit physikalisch möglichen Bewegungstrajektorien PMT derart, dass zunächst die Schnittmenge U aus beiden Gruppen als Lösungsmenge gebildet wird. Berücksichtigt werden die Bewegungstrajektorien T der Lösungsmenge, die der Kritikalität der Fahrsituation entspricht. Die Unterstützung des Fahrers in seiner Fahraufgabe erfolgt in Abhängigkeit der berechneten Bewegungstrajektorie T in Form von Brems- und/oder Lenkeingriffen und erstreckt sich von der Unterstützung des Fahrers über die Korrektur der Fahrervorgabe bis hin zu vollständig automatisierten bzw. autonomen, d.h. fahrerunabhängigen Eingriffen.

In Fig. 4 sind mehrere Bewegungstrajektorien T dargestellt, die jeweils eine Schwerpunktbahn des Fahrzeugs 1 darstellen. Der Schwerpunkt 5 des Fahrzeugs bewegt sich auf einer der Bewegungstrajektorien T. Wie am rechten Bildrand in Fig. 4 dargestellt ist, bedeuten die physikalisch möglichen Bewegungstrajektorien PMT eine Geradeausfahrt bis zur fahrdynamischen Grenze. Die situativ notwendigen Bewegungstrajektorien SNT schließen dagegen die Geradeausfahrt aus, da diese zu einem Zusammenstoß führen würde. Die situativ notwenige Bewegungstrajektorie SNT mit der geringsten Krümmung führt gerade noch am Hindernis, dem Kraftfahrzeug 4, vorbei. Die Schnittmenge U aus den situativ notwendigen Bewegungstrajektorien SNT und den physikalisch möglichen Bewegungstrajektorien PMT wird gebildet. Lediglich Bewegungstrajektorien T, die sich innerhalb der Schnittmenge befinden, kommen als Ausweichbahn für das Fahrzeug 1 in Frage.

Nur wenn die situativ notwendigen Bewegungstrajektorien SNT und die physikalisch möglichen Bewegungstrajektorien PMT zur Deckung kommen ist die Bildung der Schnittmenge U möglich und nur in diesem Fall ist eine Ausweichempfehlung, eine Ausweichunterstützung oder ein autonomer Eingriff überhaupt möglich und sinnvoll. Daher ist das Vorliegen der Schnittmenge U die Voraussetzung für die Durchführung einer nachfolgenden Ausweichempfehlung, einer Unterstützung des Fahrers oder eines autonomen Eingriffs. Die erste Bedingung sind die situativ notwendigen Bewegungstrajektorien SNT. Das bedeutet, dass ein Objekt O wie das in Fig. 3 dargestellte Fahrzeug 4 sich in der Bewegungsrichtung des eigenen Fahrzeugs 1 befinden muss und sich mit diesem auf Kollisionskurs befindet. Außerdem muss für eine situativ notwendige Bewegungstrajektorie SNT eine ausreichende Freifahrumgebung vorhanden sein, damit das eigene Fahrzeug 1 dem zweiten Fahrzeug 4 ausweichen kann. Zu diesem Zweck wird mit Hilfe der Umfeldsensorik 2 ein Zielkorridor mit einem situativ möglichen Toleranzband bestimmt. Die zweite Bedingung sind die physikalisch möglichen Bewegungstrajektorien PMT. Physikalisch möglich ist eine Bewegungstrajektorie T, wenn die Fahrphysik der Bewegungstrajektorie T nicht entgegensteht. Aus den fahrdynamischen Eigenschaften des Kraftfahrzeugs 1 und dem sich zwischen Reifen und Fahrbahn einstellenden Reibbeiwert µ werden die fahrphysikalischen Eigenschaften bis zu einem maximal verfügbaren Grenzreibbeiwert µₘₐₓ berechnet. Die Begrenzung durch Fahrphysik kann im Bezug auf Fahrdynamik durch Fahrzeugverhalten insbesondere querdynamischen Größen wie beispielsweise die maximal erlaubte Querbeschleunigung, die maximal erlaubte Gierrate, die maximal erlaubte Quergeschwindigkeit und der maximal erlaubte Gierwinkel bzw. der potenzielle Reibwert µ zwischen Fahrzeugreifen und Fahrbahnoberfläche für eine Bewegungstrajektorie T. Die dabei zu Grunde liegende Ausnutzung des maximal zur Verfügung stehenden Reibbeiwerts µ erfolgt in Abhängigkeit von der Kritikalität der Situation: Je höher die Kritikalität desto höher ist die Ausnutzung des Reibbeiwerts µ. Das vorrangige Ziel ist die Vermeidung der Kollision bzw. die Verminderung der Unfallfolgen. Beim Fahren im Normalfahrbereich, d.h. dass die Kritikalität der Fahrsituation unterhalb eines Grenzwerts liegt, erfolgt die Prädiktion und Adaption der Bewegungstrajektorie T auch auf Basis eines vorgegebenen Fahrerprofils und/oder Fahrertyps/-verhaltens erfolgen. Die sich aus den berechneten Bewegungstrajektorien T ergebenden Radkräfte infolge kombinierter Brems- und/oder Lenkeingriffe müssen jederzeit unterhalb des maximal möglichen Reibbeiwerts µₘₐₓ liegen. Der maximal mögliche Reibbeiwerts µₘₐₓ wird aus zusätzlichen Signale aus optischen Fahrbahnsensoren und/oder aus Fahrdynamikregelsystemen und/oder aus weiteren Sensoren wie Regen-, Temperatur- oder Reifensensoren bestimmt. Diejenigen zusätzlichen Signale, die nicht zur Bestimmung des maximal verfügbaren Reibbeiwerts µₘₐₓ benötigt werden, werden zur Plausibilisierung des bestimmten Reibbeiwerts µₘₐₓ herangezogen. Der maximal mögliche Reibbeiwert µₘₐₓ wird dabei logisch auf vorab bestimmte Werte begrenzt. Beispielsweise kann bei der Erkennung von Schnee auf der Fahrbahn der maximal mögliche Reibbeiwert µₘₐₓ= 0,5 gesetzt werden. Bei Nässe wird angenommen, dass der maximal mögliche Reibbeiwert µₘₐₓ kleiner als 0,7 oder 0,8 ist.

Die Schnittmenge U aus den situativ notwendigen und physikalisch möglichen Bewegungstrajektorien SNT, PMT bildet die Lösungsmenge und es werden nur die Bewegungstrajektorien T berücksichtigt, die sich innerhalb der Schnittmenge U befinden.

In der Auslegung einer Bewegungstrajektorie T oder einer Schar von Bewegungstrajektorien T wird die prädizierte Bewegungstrajektorie T während des Fahrmanövers ständig überwacht und im Bedarfsfall auf Grund einer sich dynamisch ändernden Fahrsituation adaptiert. Falls dies nicht möglich ist wird die Bewegungstrajektorie T verworfen und neu prädiziert.

Alternativ wird eine endliche Anzahl Z an Bewegungstrajektorien T zur Unterstützung des Fahrers in allen Fahrsituationen vorab ermittelt und gespeichert. In einer Notsituation wird aus den vorab definierten Bewegungstrajektorien T diejenige Bewegungstrajektorie T ausgewählt, die der vorliegenden Fahrsituation am nächsten kommt. Dabei wird beim Erkennen einer kritischen Fahrsituation, eine geeignete Bewegungstrajektorie T ausgewählt und dem ausführenden Steuergerät eine Ordnungsnummer der Bewegungstrajektorie übermittelt. Das ausführende Steuergerät entnimmt aus dem Speicher die der Ordnungsnummer entsprechende Bewegungstrajektorie T und führt diese entsprechend aus. Der Vorteil dieses Verfahrens liegt darin, dass nicht der gesamte Freifahrumgebung zur Bildung einer Bewegungstrajektorie T in Frage kommt, sondern nur die vorab definierten Bewegungstrajektorien T. Durch diese Maßnahme wird Rechenleistung eingespart bzw. die Entscheidung zugunsten einer bestimmten Bewegungstrajektorie kann innerhalb kürzerer Zeit erfolgen.

Anstelle also die Bewegungstrajektorie der Ausweichbahn aus einem unendlichen Raum an möglichen Parametern zu bestimmen, wird eine endliche Anzahl Z an Bewegungstrajektorien T vorab bestimmt und in einem Speichermedium abgespeichert. Diese gespeicherten Bewegungstrajektorien T decken alle Situationen ab, in denen das System unterstützen soll. Wird nun ein Eingriff notwendig, so wird nur noch festgelegt, welche der Bewegungstrajektorien T in der Situation am besten passt und diese Bewegungstrajektorie T wird dann verwendet.

Dabei sind die Verläufe der Bewegungstrajektorien T auf einem anderen Steuergerät gespeichert werden, als in dem Steuergerät, in dem die Entscheidung und Auswahl der Bewegungstrajektorie T erfolgt. Im anhand von Fig. 2 beschriebenen Ausführungsbeispiel ist der Verlauf der Bewegungstrajektorie T in der Lenkungsaktuatorsteuerung 28 gespeichert, während die Entscheidung und Auswahl der Bewegungstrajektorie T in der Entscheidungseinrichtung 22 erfolgt. Die Entscheidungseinrichtung übermittelt lediglich die Ordnungsnummer der zu verwendenden Bewegungstrajektorie T. Die Bewegungstrajektorien sind dabei als Punktscharen oder als Parametersätze für ein Bewegungstrajektorienmodel im Lenkungsaktuatorsteuerung 28 gespeichert. Durch die Beschränkung auf eine feste Anzahl Z an Bewegungstrajektorien T ist es leichter, diese auf ihre Funktion abzuprüfen und somit sicherzustellen, dass eine Regelung auf diese Bewegungstrajektorien T möglich ist.

Eine Bewegungstrajektorie T wird als optimal angesehen, wenn sie sich innerhalb der Schnittmenge U der situativ notwendigen Bewegungstrajektorien SNT und der physikalisch möglichen Bewegungstrajektorien PMT befindet und eine minimale Krümmung aufweist. Durch die Bedingung der minimalen Krümmung werden die fahrphysikalischen Grenzen größtmöglich beabstandet. Das bedeutet, dass ein Sicherheitsabstand zum fahrphysikalischen Limit eingehalten wird und das Fahrzeug dennoch unfallvermeidend geführt wird. Durch die minimale Krümmung der Bewegungstrajektorie T bleibt für den Fahrer ein komfortables Fahrgefühl erhalten.

Generell kann das Verfahren auch auf andere Objekte als das eigene Kraftfahrzeug angewendet werden und beispielsweise auf Bewegungstrajektorien T von Objekten O, die durch die Umfeldsensorik 2 erkannt wurden, angewendet werden.

## Patentansprüche

1. Verfahrens zur Prädiktion und Adaption von Bewegungstrajektorien (T) eines Kraftfahrzeugs zur Unterstützung des Fahrers in seiner Fahraufgabe und/oder zur Verhinderung einer Kollision oder Minderung von Unfallfolgen, **dadurch gekennzeichnet,**
**dass** zur Prädiktion und Adaption der Bewegungstrajektorien (T) des Kraftfahrzeugs (1) eine Schnittmenge (U) aus situativ notwendigen Bewegungstrajektorien (SNT), die mit Hilfe einer Umfeldsensorik (2) bestimmt werden, und aus physikalisch möglichen Bewegungstrajektorien (PMT), die sich aus den fahrdynamischen Eigenschaften des Kraftfahrzeugs (1) und dem sich zwischen Reifen und Fahrbahn einstellenden Reibbeiwert (µ) bis zu einem maximal möglichen Grenzreibbeiwert (µₘₐₓ) ergeben, gebildet wird, wobei ausschließlich Bewegungstrajektorien (T) berücksichtigt werden, die sich innerhalb der Schnittmenge (U) befinden.

2. Verfahren nach Anspruch 1, **dadurch gekennzeichnet, dass** aus der Schnittmenge (U) nur eine Bewegungstrajektorie (T) in Abhängigkeit von der Kritikalität der Fahrsituation berücksichtigt wird.

3. Verfahren nach Anspruch 1 oder 2, **dadurch gekennzeichnet, dass** die situativ notwendigen Bewegungstrajektorien (SNT) anhand der Freifahrumgebung bestimmt wird und die physikalisch möglichen Bewegungstrajektorien (PMT) durch die Fahrphysik begrenzt wird.

4. Verfahren nach Anspruch 1 oder 2, **dadurch gekennzeichnet, dass** mit Hilfe der Umfeldsensorik (2) ein Zielkorridor mit einem situativ notwendigen und physikalisch möglichen Toleranzband bestimmt wird.

5. Verfahren nach einem der vorhergehenden Ansprüche, **dadurch gekennzeichnet, dass** die prädizierte Bewegungstrajektorien (T) während des Fahrmanövers ständig überwacht und im Bedarfsfall auf Grund einer sich dynamisch ändernden Fahrsituation adaptiert oder verworfen und neu prädiziert werden.

6. Verfahren nach einem der vorhergehenden Ansprüche, **dadurch gekennzeichnet, dass** Brems- und/oder Lenkeingriffe in Abhängigkeit der berechneten Bewegungstrajektorien (T) mit dem Ziel der Fahrerunterstützung, der Korrektur der Fahrervorgaben oder automatisierten Eingriffen in die Brems- und/oder Lenkanlage erfolgen.

7. Verfahren nach einem der vorhergehenden Ansprüche, **dadurch gekennzeichnet, dass** die sich aus den Bewegungstrajektorien (T) durch kombinierte Brems- und/oder Lenkeingriffe ergebenden Radkräfte jederzeit unterhalb des maximal verfügbaren Reibbeiwerts (µₘₐₓ) liegen.

8. Verfahren nach einem der vorhergehenden Ansprüche, **dadurch gekennzeichnet, dass** zur Bestimmung des maximal möglichen Reibbeiwerts (µₘₐₓ) zusätzliche Signale aus optischen Fahrbahnsensoren und/oder aus Fahrdynamikregelsystemen und/oder aus weiteren Sensoren wie Regen-, Temperatur- oder Reifensensoren und/oder durch Einbeziehung von Informationen, die mittels Car-to-X-Kommunikation übertragen werden, verwendet werden.

9. Verfahren nach Anspruch 8, **dadurch gekennzeichnet, dass** der maximal mögliche Reibbeiwert (µₘₐₓ) durch die Signale der zur Bestimmung nicht verwendeten Sensoren plausibilisiert wird.

10. Verfahren nach Anspruch 8 oder 9, **dadurch gekennzeichnet, dass** der maximal mögliche Reibbeiwert (µₘₐₓ) logisch auf vorab bestimmte Werte begrenzt wird.

11. Verfahren nach einem der vorhergehenden Ansprüche, **dadurch gekennzeichnet, dass** eine endliche Anzahl (Z) an Bewegungstrajektorien (T) zur Unterstützung des Fahrers in allen Fahrsituationen vorab ermittelt und gespeichert wird.

12. Verfahren nach Anspruch 11, **dadurch gekennzeichnet, dass** aus den vorab definierten Bewegungstrajektorien (T) diejenige Bewegungstrajektorie (T) ausgewählt wird, die der vorliegenden Fahrsituation am nächsten kommt.

13. Verfahren nach Anspruch 11 oder 12, **dadurch gekennzeichnet, dass** beim Erkennen einer kritischen Fahrsituation, eine geeignete Bewegungstrajektorie (T) ausgewählt wird und dem ausführenden Steuergerät eine Ordnungsnummer der Bewegungstrajektorie (T) übermittelt wird.

14. Verfahren nach einem der vorhergehenden Ansprüche, **dadurch gekennzeichnet, dass** eine Bewegungstrajektorie (T) als optimal erkannt wird, wenn sie sich innerhalb der Schnittmenge (U) befindet und eine minimale Krümmung aufweist.

15. Vorrichtung zur Prädiktion und Adaption von Bewegungstrajektorien (x) eines Kraftfahrzeugs (1), **dadurch gekennzeichnet, dass** Mittel zur Prädiktion und Adaption der Bewegungstrajektorien (T) des Kraftfahrzeugs (1) vorgesehen sind, die eine Schnittmenge (U) aus situativ notwendigen Bewegungstrajektorien (T), die mit Hilfe einer Umfeldsensorik (2) bestimmt werden, und aus physikalisch möglichen Bewegungstrajektorien (T), die sich aus den fahrdynamischen Eigenschaften des Kraftfahrzeugs (1) und dem sich zwischen Reifen und Fahrbahn einstellenden Reibbeiwert (µ) bis zu einem maximal möglichen Grenzreibbeiwert (µₘₐₓ) ergeben, bilden und ausschließlich Bewegungstrajektorien (T) berücksichtigen, die sich innerhalb der Schnittmenge (U) befinden.

16. Vorrichtung nach einem der vorher gehenden Ansprüche, **dadurch gekennzeichnet, dass** die Umfeldsensorik (2) aus einem Radarsensor, einem Lidarsensor, einem Kamerasystem oder aus einer Kombination dieser Sensoren gebildet wird.

17. Vorrichtung nach einem der vorher gehenden Ansprüche, **dadurch gekennzeichnet, dass** ein Speicher vorgesehen ist, in dem eine vorab ermittelte, endliche Anzahl (Z) an Bewegungstrajektorien (T) zur Unterstützung des Fahrers in allen Fahrsituationen gespeichert wird.

18. Vorrichtung nach Anspruch 15, **dadurch gekennzeichnet, dass** im ausführenden Steuergerät die Bewegungstrajektorie (T) unter einer Ordnungsnummer gespeichert ist.

## Claims

1. A method for the prediction and adaptation of movement trajectories T of a motor vehicle for assisting the driver in his or her task of driving and/or for preventing a collision or reducing the consequences of an accident,
**characterized in that**
for the prediction and adaptation of movement trajectories (T) of the motor vehicle (1), an intersection (U) of situatively required movement trajectories (SNT), which are determined using environment sensors (2), and physically possible movement trajectories (PMT), which result from properties that are characteristic of the driving dynamics of the motor vehicle (1) and from the coefficient of friction (µ) obtained between the tires and the road up to a maximum possible threshold coefficient of friction (µₘₐₓ), is formed, and only those movement trajectories (T) are taken into account that lie within this intersection (U).

2. The method according to Claim 1, **characterized in that** only one movement trajectory (T) from the intersection (U) is taken into account depending on the criticality of the driving situation.

3. The method according to Claim 1 or 2, **characterized in that** the situatively required movement trajectories (SNT) are determined based on the avoidance space available and the physically possible movement trajectories (PMT) are limited by the driving physics.

4. The method according to Claim 1 or 2, **characterized in that** the environment sensors (2) are used to determine a target corridor with a situatively required and physically possible tolerance margin.

5. The method according to any one of the preceding claims,
**characterized in that** the predicted movement trajectories (T) are constantly monitored during a driving maneuver and, if required, adapted to a dynamically changing driving situation or are discarded and newly predicted.

6. The method according to any one of the preceding claims,
**characterized in that** braking and/or steering interventions are performed depending on the calculated movement trajectories (T) with the purpose of assisting the driver, correcting the driver input, or automated interventions in the braking and/or steering system.

7. The method according to any one of the preceding claims,
**characterized in that** wheel forces resulting from combined braking and/or steering interventions based on the movement trajectories (T) are always below the maximum available coefficient of friction (µₘₐₓ).

8. The method according to any one of the preceding claims,
**characterized in that** the maximum possible coefficient of friction (µₘₐₓ) is determined using additional signals from optical road sensors and/or from vehicle dynamics control systems and/or from other sensors such as rain, temperature, or tire sensors and/or by including information transmitted via car-to-x communication.

9. The method according to Claim 8, **characterized in that** the maximum possible coefficient of friction (µₘₐₓ) is tested for plausibility using the signals from the sensors that were not used for its determination.

10. The method according to Claim 8 or 9, **characterized in that** the maximum possible coefficient of friction (µₘₐₓ) is logically limited to predetermined values.

11. The method according to any one of the preceding claims,
**characterized in that** a finite number (Z) of movement trajectories (T) for assisting the driver in all driving situations is determined in advance and stored.

12. The method according to Claim 11, **characterized in that** the movement trajectory (T) that comes closest to the current driving situation is selected from the predefined movement trajectories (T).

13. The method according to Claim 11 or 12, **characterized in that** upon detection of a critical driving situation, a suitable movement trajectory (T) is selected and a sequence number of the movement trajectory (T) is transmitted to the executing control unit.

14. The method according to any one of the preceding claims,
**characterized in that** a movement trajectory (T) is identified as optimal if it is within the intersection (U) and has a minimum curvature.

15. A device for the prediction and adaptation of movement trajectories (x) of a motor vehicle (1), **characterized in that** means for the prediction and adaptation of movement trajectories (T) of the motor vehicle (1) are provided that establish an intersection (U) of situatively required movement trajectories (T), which are determined using environment sensors (2), and physically possible movement trajectories (T), which result from properties that are characteristic of the driving dynamics of the motor vehicle (1) and from the coefficient of friction (µ) obtained between the tires and the road up to a maximum possible threshold coefficient of friction (µₘₐₓ), and take into account only those movement trajectories (T) that lie within this intersection (U).

16. The device according to any one of the preceding claims,
**characterized in that** the environment sensors (2) comprise a radar sensor, a lidar sensor, a camera system, or a combination of these sensors.

17. The device according to any one of the preceding claims,
**characterized in that** a memory is provided in which a predetermined, finite number (Z) of movement trajectories (T) for assisting the driver in all driving situations is stored.

18. The device according to Claim 15, **characterized in that** the movement trajectory (T) is stored under a sequence number in the executing control unit.

## Revendications

1. Procédé de prédiction et d'adaptation de trajectoires de déplacement (T) d'un véhicule automobile afin d'assister le conducteur dans sa tâche de conduite et/ou afin d'empêcher une collision ou de réduire les conséquences d'un accident,
**caractérisé en ce que,**
pour la prédiction et l'adaptation des trajectoires de déplacement (T) du véhicule automobile , il est formé une intersection d'ensembles (U) composés de trajectoires de déplacement (SNT) nécessaires en fonction de la situation qui sont déterminées à l'aide d'un système de capteurs d'environnement (2) et de trajectoires de déplacement (PMT) physiquement possibles qui résultent des propriétés dynamiques de roulement du véhicule automobile (1) et du coefficient de frottement (µ) s'établissant entre les pneus et la chaussée jusqu'à un coefficient de frottement limite (µₘₐₓ) maximum possible, seules des trajectoires de déplacement (T) qui se situent à l'intérieur de l'intersection d'ensembles (U) étant prises en considération.

2. Procédé selon la revendication 1, **caractérisé en ce que,** à partir de l'intersection d'ensembles (U), seule une trajectoire de déplacement (T) est prise en considération en fonction de la criticité de la situation de conduite.

3. Procédé selon la revendication 1 ou 2, **caractérisé en ce que** les trajectoires de déplacement (SNT) nécessaires en fonction de la situation sont déterminées à l'aide de l'environnement de conduite libre et les trajectoires de déplacement (PMT) physiquement possibles sont limitées par la physique de conduite.

4. Procédé selon la revendication 1 ou 2, **caractérisé en ce que,** à l'aide du système de capteurs d'environnement (2), un corridor cible est déterminé avec une bande de tolérance nécessaire en fonction de la situation et physiquement possible

5. Procédé selon l'une des revendications précédentes, **caractérisé en ce que** les trajectoires de déplacement (T) prédites sont surveillées en permanence pendant la manoeuvre de conduite et adaptées en cas de besoin, ou sont rejetées et prédites de nouveau, sur la base d'une situation de conduite qui varie de façon dynamique.

6. Procédé selon l'une des revendications précédentes, **caractérisé en ce que** des interventions de freinage et/ou de braquage sont effectuées en fonction des trajectoires de déplacement (T) calculées dans le but d'assister le conducteur, de corriger les consignes du conducteur ou d'interventions automatisées dans le système de freinage et/ou de braquage.

7. Procédé selon l'une des revendications précédentes, **caractérisé en ce que** les forces de roue résultant des trajectoires de déplacement (T) par des interventions de freinage et/ou de braquage combinées sont à tout moment situées au-dessous du coefficient de frottement (µₘₐₓ) maximum disponible.

8. Procédé selon l'une des revendications précédentes, **caractérisé en ce que,** pour la détermination du coefficient de frottement (µₘₐₓ) maximum possible, il est utilisé des signaux supplémentaires en provenance de capteurs optiques de chaussée et/ou de systèmes de régulation de la dynamique de roulement et/ou d'autres capteurs tels que des capteurs de pluie, de température ou de pneus et/ou par l'intégration d'informations qui sont transmises au moyen de la communication car-to-X.

9. Procédé selon la revendication 8, **caractérisé en ce que** la plausibilité du coefficient de frottement (µₘₐₓ) maximum possible est examinée au moyen des signaux des capteurs non utilisés pour la détermination.

10. Procédé selon la revendication 8 ou 9, **caractérisé en ce que** le coefficient de frottement (µₘₐₓ) maximum possible est limité par voie logique à des valeurs déterminées au préalable.

11. Procédé selon l'une des revendications précédentes, **caractérisé en ce qu**'un nombre final (Z) de trajectoires de déplacement (T) sont définies au préalable et enregistrées en vue d'assister le conducteur dans toutes les situations de conduite.

12. Procédé selon la revendication 11, **caractérisé en ce que,** à partir des trajectoires de déplacement (T) définies au préalable, on sélectionne la trajectoire de déplacement (T) qui se rapproche le plus de la situation de conduite présente.

13. Procédé selon la revendication 11 ou 12, **caractérisé en ce que,** lors de la détection d'une situation de conduite critique, une trajectoire de déplacement (T) appropriée est sélectionnée et un numéro d'ordre de la trajectoire de déplacement (T) est transmis à l'appareil de commande chargé de l'exécution.

14. Procédé selon l'une des revendications précédentes, **caractérisé en ce qu**'une trajectoire de déplacement (T) est détectée comme étant optimale si elle se trouve à l'intérieur de l'intersection d'ensembles (U) et présente une courbure minimale.

15. Dispositif destiné à la prédiction et l'adaptation de trajectoires de déplacement (x) d'un véhicule automobile (1), **caractérisé en ce qu'**il est prévu des moyens de prédiction et d'adaptation des trajectoires de déplacement (T) du véhicule automobile (1) qui forment une intersection d'ensembles (U) composés de trajectoires de déplacement (T) nécessaires en fonction de la situation qui sont déterminées à l'aide d'un système de capteurs d'environnement, et de trajectoires de déplacement (T) physiquement possibles qui résultent des propriétés dynamiques de roulement du véhicule automobile (1) et du coefficient de frottement (µ) s'établissant entre les pneus et la chaussée jusqu'à un coefficient de frottement limite (µₘₐₓ) maximum possible, et ne prennent exclusivement en considération que des trajectoires de déplacement (T) qui se situent à l'intérieur de l'intersection d'ensembles (U).

16. Dispositif selon l'une des revendications précédentes, **caractérisé en ce que** le système de capteurs d'environnement (2) est formé d'un capteur radar, d'un capteur lidar, d'un système de caméra ou d'une combinaison de ces capteurs.

17. Dispositif selon l'une des revendications précédentes, **caractérisé en ce qu**'il est prévu une mémoire dans laquelle sont enregistrées un nombre final (Z) de trajectoires de déplacement (T) définies au préalable en vue d'assister le conducteur dans toutes les situations de conduite.

18. Dispositif selon la revendication 15, **caractérisé en ce que** la trajectoire de déplacement (T) est enregistrée sous un numéro d'ordre dans l'appareil de commande chargé de l'exécution.
